# FASCICULE DE BREVET EUROPEEN

(11) **EP 2 738 101 B1**
(45) Date de publication et mention de la délivrance du brevet: **21.06.2017**
(21) Numéro de dépôt: 13194677.4
(22) Date de dépôt: 27.11.2013
(51) Int. Cl.: B64C 7/00, B64D 47/08

(54) **Système d'équipement escamotable comprenant un dispositif optimisé pour la manoeuvre de volets de protection**
Versenkbares Ausstattungssystem, das eine optimierte Vorrichtung zur Betätigung der Schutzklappen umfasst
Retractable equipment system including an optimised device for manoeuvring protection flaps

(30) Priorité: 30.11.2012 FR 1261490
(43) Date de publication de la demande: 04.06.2014
(73) Titulaire: Airbus Opérations SAS, 31060 Toulouse (FR)
(72) Inventeur: L'Heritier, Michel, 31770 COLOMIERS (FR); Doustens, Eric, 31470 FONSORBES (FR); Bosc, Philippe, 31240 L'UNION (FR); Castagne, Philippe, 12450 LA PRIMAUBE (FR)
(74) Mandataire: Ilgart, Jean-Christophe

(56) Documents cités:
- US-A- 2 921 501
- US-A- 4 176 812
- US-A- 5 257 758
- US-A1- 2005 029 399
- US-B1- 8 137 007

## Description

### DOMAINE TECHNIQUE

La présente invention se rapporte au domaine des équipements escamotables pour les aéronefs, et concerne plus particulièrement l'actionnement de ces équipements et de volets destinés à la protection de ceux-ci.

L'invention est notamment destinée aux équipements de télédétection, tels que les senseurs optroniques.

### ÉTAT DE LA TECHNIQUE ANTÉRIEURE

Il est connu d'équiper des aéronefs avec des équipements de télédétection.

Lorsqu'un tel équipement est disposé au niveau d'une partie supérieure d'un aéronef, l'équipement peut être monté fixement. C'est par exemple le cas des boules optroniques dans certains avions de chasse.

En revanche, lorsqu'un tel équipement est disposé au niveau d'une partie inférieure d'un aéronef, par exemple sous les ailes ou sous le fuselage, il est souhaitable que cet équipement soit escamotable dans un compartiment muni de moyens de protection mobiles, tels qu'un ou plusieurs volets, aptes à protéger l'équipement d'éventuels projectiles lorsque l'équipement n'est pas en fonctionnement, notamment pendant les phases de roulage lors du décollage et de l'atterrissage.

La manoeuvre des moyens de protection requiert en général des dispositifs d'entraînement dédiés, c'est-à-dire indépendants des dispositifs de manoeuvre de l'équipement lui-même, ce qui se révèle pénalisant en termes de masse, de coût de fabrication et de coût d'entretien, et d'encombrement.

Il existe ainsi un besoin pour un dispositif de manoeuvre compact, léger et économique.

Le document US 4 176 812 décrit un aéronef comprenant une porte de secours qui, en position fermée, s'inscrit dans une section aérodynamique de raccordement du fuselage à l'aile. Cette section de raccordement présente également une ouverture dans laquelle vient se loger la porte en position ouverte et obturée par un panneau de protection en position fermée. La porte est articulée sur un vilebrequin. Lors de l'ouverture de la porte sous l'action d'une manivelle, le vilebrequin tourne sous l'entraînement d'engrenages de manière à soulever la porte et la désengager ainsi de pions de retenue agissant au niveau de l'extrémité supérieure de la porte. Dès lors, la porte étant montée rotative autour de la tige du vilebrequin, cette porte est entraînée en rotation vers le bas et l'extérieur de l'aéronef sous l'effet de son poids et d'un ressort de traction. Un mécanisme de manoeuvre permet d'entraîner le dégagement du panneau de protection lors de l'ouverture de la porte, et le retour de ce panneau dans sa position de fermeture lors de la fermeture de la porte. Ce mécanisme comporte un galet engagé simultanément dans une glissière solidaire de la porte et dans une glissière solidaire de la structure de l'aile. Ce galet est relié par une bielle à un organe d'entraînement solidaire du panneau de protection. Cet organe porte un galet monté dans la glissière. Lors de la première phase du mouvement d'ouverture de la porte correspondant à l'élévation de cette dernière du fait de la rotation du vilebrequin, le galet se déplace dans la glissière en entraînant un pivotement de la bielle sans provoquer de déplacement de l'organe d'entraînement et donc du panneau de protection. En revanche, lors d'une deuxième phase ultérieure de ce mouvement d'ouverture correspondant au pivotement de la porte vers le bas, le galet se déplace conjointement le long des glissières et en entraînant un déplacement rectiligne de l'organe d'entraînement dans la glissière solidaire de la structure de l'aile.

Le document US 2 921 501 décrit un dispositif de déploiement d'armement d'aéronef synchronisé avec des volets de protection, dans lequel la synchronisation est obtenue par un mécanisme à base de bielles articulées et d'engrenages concourants.

Le document US 2005/0029399 A1 décrit un dispositif de déploiement et de rétraction de boule optronique pour aéronef.

Le document US 8 137 007 B1 décrit un dispositif de déploiement et de rétraction de boule optronique pour drone, dans lequel des volets sont synchronisés au déplacement de la boule optronique au moyen d'engrenages.

Le document US 5 257 758 décrit un dispositif de déploiement de missile pour aéronef dans lequel un panneau de protection est solidaire d'un support de missile.

### EXPOSÉ DE L'INVENTION

L'invention propose à cet effet un système pour aéronef, comprenant :
- un châssis destiné à être monté sur une structure d'aéronef,
- un équipement déplaçable par rapport audit châssis, le long d'une trajectoire prédéterminée, entre une position « escamoté » et une position « déployé »,
- des moyens de protection déplaçables entre une première position dans laquelle lesdits moyens de protection interceptent ladite trajectoire dudit équipement pour protéger ce dernier, et une seconde position dans laquelle lesdits moyens de protection sont écartés de ladite trajectoire pour permettre le passage dudit équipement, et
- au moins un dispositif de manoeuvre pour entraîner lesdits moyens de protection entre lesdites première et seconde positions.

Selon l'invention, le dispositif de manoeuvre comprend :
- une came solidaire dudit châssis,
- un suiveur de came coopérant avec ladite came,
- un organe d'entraînement relié auxdits moyens de protection de manière à entraîner ces derniers entre lesdites première et seconde positions,
- des premiers moyens de couplage assurant un couplage mécanique dudit suiveur de came audit équipement, et
- des seconds moyens de couplage assurant un couplage mécanique dudit suiveur de came audit organe d'entraînement.

De plus, ladite came, lesdits premiers moyens de couplage et lesdits seconds moyens de couplage sont configurés de sorte que ledit suiveur de came convertisse un déplacement rectiligne dudit équipement le long de ladite trajectoire en un déplacement rectiligne dudit organe d'entraînement, d'une manière telle que le rapport des vitesses respectives dudit organe d'entraînement et dudit équipement varie au cours du déplacement dudit équipement.

De manière conventionnelle, l'expression « suiveur de came » désigne un élément contraint de rester en contact avec ladite came.

Le dispositif de manoeuvre permet ainsi de réaliser un couplage mécanique dudit équipement et des moyens de protection, de sorte qu'un seul et même organe moteur puisse être utilisé pour l'entraînement dudit équipement et de ces moyens de protection.

La variation du rapport des vitesses respectives de l'organe d'entraînement et de l'équipement, induite par le dispositif de manoeuvre, permet d'optimiser la synchronisation des cinématiques respectives de l'équipement et des moyens de protection.

En particulier, il est ainsi possible d'opérer un déplacement relativement rapide des moyens de protection depuis leur première position vers leur seconde position de manière à assurer que les moyens de protection ne forment pas obstacle au passage de l'équipement lors du déploiement de ce dernier. De manière analogue, le déplacement des moyens de protection, depuis leur seconde position vers leur première position, peut être opéré en majeure partie ou en totalité durant une partie finale de la course d'escamotage de l'équipement.

Par conséquent, l'invention autorise une relative proximité de l'équipement en position « escamoté » et des moyens de protection dans leur première position, et l'invention permet de limiter l'écartement des moyens de protection par rapport à la trajectoire de l'équipement, lorsque ces moyens de protection sont dans leur seconde position.

De préférence, ladite came, lesdits premiers moyens de couplage et lesdits seconds moyens de couplage sont configurés pour coupler le déplacement dudit organe d'entraînement au déplacement dudit équipement lorsque ce dernier se trouve entre sa position « escamoté » et une position intermédiaire prédéterminée, et pour découpler les déplacements dudit organe d'entraînement et dudit équipement lorsque ce dernier se trouve entre ladite position intermédiaire prédéterminée et sa position « déployé ».

Lors du déploiement dudit équipement, le dispositif de manoeuvre permet ainsi un déplacement des moyens de protection de leur première position vers leur seconde position pendant que l'équipement passe de sa position « escamoté » à ladite position intermédiaire, et permet ensuite un maintien des moyens de protection dans leur seconde position pendant que l'équipement passe de ladite position intermédiaire à sa position « déployé ».

De manière analogue, lors de l'escamotage de l'équipement, le dispositif de manoeuvre permet un maintien des moyens de protection dans leur seconde position pendant que l'équipement passe de sa position « déployé » à ladite position intermédiaire, puis un déplacement des moyens de protection de leur seconde position vers leur première position pendant que l'équipement passe de ladite position intermédiaire à sa position « escamoté ».

Le découplage des déplacements respectifs de l'organe d'entraînement et de l'équipement ne doit pas être compris comme signifiant que ces deux éléments sont alors découplés mécaniquement. Au contraire, la came et les premiers et seconds moyens de couplage permettent de maintenir une liaison mécanique entre l'organe d'entraînement et l'équipement même lorsque leurs déplacements sont découplés. Cette liaison mécanique permet d'assurer le contrôle de la position de l'organe d'entraînement tout au long de la course de l'équipement.

Dans un mode de réalisation préféré de l'invention :
- ladite came est formée par une première glissière, solidaire dudit châssis,
- lesdits seconds moyens de couplage comprennent une deuxième glissière déplaçable parallèlement à ladite trajectoire dudit équipement, et
- ledit suiveur de came est engagé simultanément dans lesdites première et deuxième glissières.

Dans ce cas, la forme des première et deuxième glissières permet de définir la fonction de transfert qui détermine le mouvement rectiligne de l'organe d'entraînement à partir du déplacement rectiligne de l'équipement.

Dans le mode de réalisation préféré de l'invention, la première glissière comporte une première portion s'étendant parallèlement à ladite trajectoire dudit équipement, une deuxième portion s'étendant orthogonalement à ladite trajectoire dudit équipement, et une portion incurvée de manière à permettre un guidage dudit suiveur de came de l'une vers l'autre desdites première et deuxième portions.

La première portion de la première glissière définit ainsi une trajectoire du suiveur de came parallèle à ladite trajectoire dudit équipement, tandis que la deuxième portion de la première glissière définit une trajectoire du suiveur de came orthogonale à ladite trajectoire dudit équipement.

De plus, ladite deuxième glissière s'étend de préférence orthogonalement à ladite trajectoire dudit équipement.

La première portion de la première glissière définit une trajectoire du suiveur de came dans laquelle ce dernier entraîne la deuxième glissière et donc l'organe d'entraînement sous l'effet du déplacement de l'équipement.

La deuxième portion de la première glissière définit une trajectoire du suiveur de came dans laquelle ce dernier maintient fixe la deuxième glissière, ainsi que l'organe d'entraînement, indépendamment du déplacement éventuel de l'équipement.

Le système comprend avantageusement un support sur lequel est monté ledit équipement.

Ce support est de préférence pourvu de moyens d'articulation.

De plus, lesdits premiers moyens de couplage comprennent avantageusement une bielle ayant une première extrémité articulée auxdits moyens d'articulation dudit support, et une seconde extrémité articulée audit suiveur de came.

La bielle permet, en coopération avec la came, d'assurer l'entraînement du suiveur de came parallèlement à la trajectoire suivie par le support lors du déplacement dudit équipement, lorsque le support se situe dans une première partie de cette trajectoire, et permet d'autoriser un blocage du suiveur de came dans la direction de ladite trajectoire lorsque le support se situe dans une seconde partie de sa trajectoire.

Ladite bielle est de préférence conçue de sorte que ses deux extrémités soient déplaçables l'une par rapport à l'autre. Cela peut notamment permettre de réduire la longueur de la deuxième portion précitée de la première glissière tout en évitant les risques de blocage de la bielle au cours du déplacement dudit équipement.

Dans ce cas, la bielle comporte avantageusement des moyens élastiques reliant mutuellement ses deux extrémités de manière à amortir d'éventuelles vibrations entre lesdites extrémités. Ces moyens élastiques peuvent par exemple être formés d'un ressort à double effet.

Dans le mode de réalisation préféré de l'invention, lesdits moyens d'articulation dudit support sont agencés de sorte que la projection orthogonale d'un axe d'articulation de ladite première extrémité de ladite bielle, sur une ligne parallèle à ladite deuxième portion de ladite première glissière, soit décalée par rapport à un axe d'articulation de ladite seconde extrémité de ladite bielle, dans un sens allant de ladite deuxième portion vers ladite première portion de ladite première glissière, lorsque lesdits moyens de protection sont dans ladite première position.

En variante, les premiers moyens de couplage peuvent comprendre une came solidaire dudit support et coopérant avec ledit suiveur de came de manière à entraîner ce dernier sous l'effet d'un déplacement dudit équipement, au moins lorsque ce dernier se trouve dans une portion prédéterminée de ladite trajectoire.

Dans ce cas, ladite came solidaire du châssis et ladite came solidaire du support déterminent conjointement la trajectoire suivie par le suiveur de came au cours d'un déplacement dudit équipement.

D'une manière générale, lesdits moyens de protection sont de préférence déplaçables en rotation selon un axe orthogonal à ladite trajectoire dudit équipement.

Par ailleurs, lesdits moyens de protection comprennent avantageusement deux volets déplaçables en rotation autour d'un axe de rotation commun, et dans des directions respectives opposées.

De plus, ledit dispositif de manoeuvre comprend de préférence deux premiers bras articulés conjointement auxdits seconds moyens de couplage au moyen d'un pivot formant ledit organe d'entraînement, ainsi que deux seconds bras ayant :
- des premières parties d'extrémité respectives articulées respectivement auxdits premiers bras,
- des secondes parties d'extrémité respectives fixées respectivement aux deux volets dudit système, et
- des parties médianes respectives articulées conjointement audit châssis de manière à pivoter autour d'un même axe d'articulation, de sorte que lesdits seconds bras forment un mécanisme en ciseaux.

Les seconds bras forment ainsi un mécanisme du type ciseaux. En effet, un écartement mutuel des premières parties d'extrémités respectives des seconds bras provoque un écartement mutuel des secondes parties d'extrémités respectives de ces seconds bras, du fait de l'articulation conjointe des parties médianes respectives des seconds bras audit châssis. De manière analogue, un rapprochement mutuel des premières parties d'extrémités précitées provoque un rapprochement mutuel des secondes parties d'extrémités précitées.

Les seconds bras permettent ainsi d'opérer alternativement un écartement et un rapprochement mutuel des deux volets formant lesdits moyens de protection.

De plus, les premiers bras permettent de convertir le déplacement rectiligne de l'organe d'entraînement en le mouvement décrit ci-dessus d'écartement et de rapprochement des seconds bras.

En variante, ledit organe d'entraînement peut être formé d'une crémaillère s'étendant selon la direction de la trajectoire dudit équipement, et coopérant par engrènement avec deux pignons solidaires respectivement des deux volets précités et déplaçables en rotation autour de l'axe de rotation commun des volets.

D'une manière générale, ledit équipement comprend par exemple un senseur optronique.

En variante, cet équipement peut comprendre tout autre type de senseur ou détecteur, ou encore tout autre type d'équipement.

Par ailleurs, lesdits volets ont de préférence chacun la forme d'une portion de sphère.

Dans leur première position, les deux volets peuvent ainsi former conjointement un dôme ou une partie d'un tel dôme.

Cette configuration est particulièrement avantageuse lorsque l'équipement précité comporte un élément de forme sphérique, tel qu'une boule optronique.

L'invention concerne également un aéronef comprenant au moins un système du type décrit ci-dessus.

Dans le mode de réalisation préféré de l'invention, lesdits moyens de protection dudit système ferment une ouverture ménagée dans un carénage dudit aéronef lorsque ces moyens de protection sont dans ladite première position.

Ce carénage peut notamment faire partie du fuselage ou de la voilure d'un aéronef, ou encore d'une nacelle de train d'atterrissage rapportée sur le fuselage d'un aéronef.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique partielle de côté d'un système comprenant un équipement escamotable et des moyens de protection de ce dernier, selon un mode de réalisation préféré de l'invention, illustré dans un état escamoté dudit équipement ;
- la figure 2 est une vue semblable à la figure 1, dans laquelle une plaque latérale de châssis est masquée pour laisser apparaître un dispositif de manoeuvre des moyens de protection ;
- la figure 3 est une vue semblable à la figure 2, illustrant le système dans un état déployé dudit équipement ;
- la figure 4 est une vue schématique partielle en perspective éclatée du dispositif de manoeuvre des moyens de protection dudit équipement, ce dispositif de manoeuvre étant représenté isolé ;
- les figures 4a, 4b et 4c sont des vues schématiques partielles en perspective du dispositif de manoeuvre de la figure 4, illustrant respectivement trois états de ce dispositif de manoeuvre correspondant respectivement à l'état escamoté, à un état intermédiaire, et à l'état déployé dudit équipement ;
- les figures 5a et 5b sont des vues schématiques partielles en perspective et en contre-plongée d'une nacelle de train d'atterrissage d'aéronef comprenant le système des figures précédentes.

### EXPOSÉ DÉTAILLÉ D'UN MODE DE RÉALISATION PRÉFÉRÉ

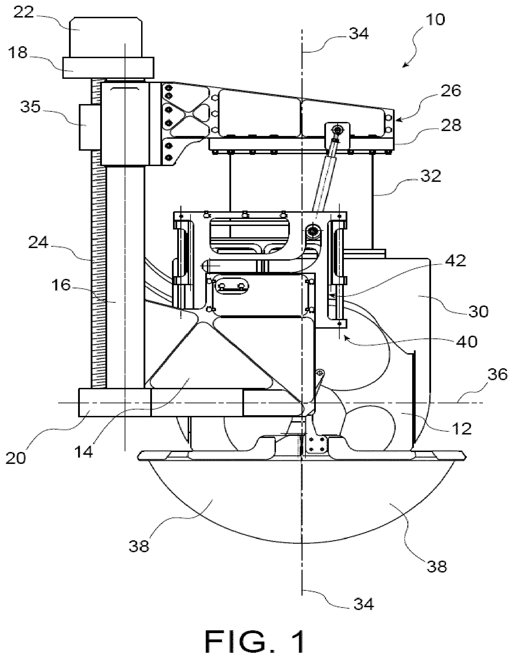

Les figures 1 à 3 illustrent un système 10 d'aéronef comprenant un équipement escamotable, consistant par exemple en un senseur optronique 12, du type couramment dénommé « boule optronique ».

Le système 10 est par exemple destiné à être logé dans une nacelle de train arrière d'avion de transport militaire, comme cela apparaîtra plus clairement dans ce qui suit.

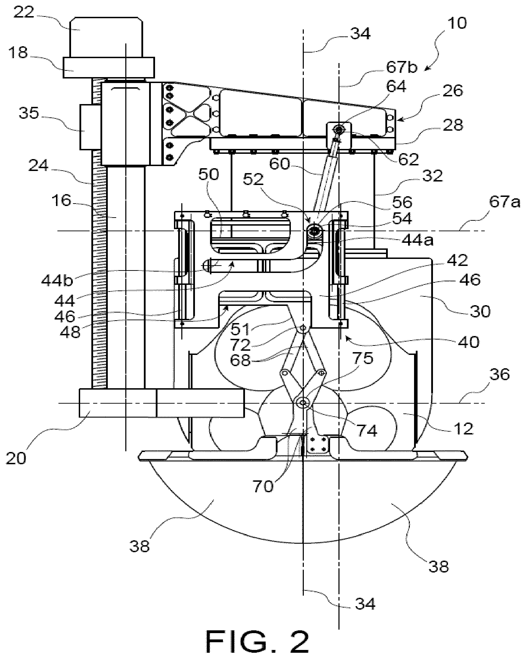

Ce système 10 comporte un châssis comprenant notamment deux colonnes 16 disposées latéralement, dont l'une est masquée par l'autre sur les figures 1 à 3, ainsi qu'une plateforme supérieure 18 (figure 1) fixée sur les extrémités supérieures respectives des colonnes 16 et une plateforme inférieure 20 (figure 2) fixée sur les extrémités inférieures respectives des colonnes 16. Les plateformes 18 et 20 s'étendent orthogonalement aux colonnes 16. Le châssis comprend également deux plaques latérales 14 fixées sur la plateforme inférieure 20, dont l'une est visible sur la figure 1, ces plaques latérales étant masquées sur les autres figures pour des raisons de clarté.

Le système 10 comprend en outre un moteur 22 monté sur la plateforme supérieure 18, ainsi qu'une tige filetée 24 accouplée à un rotor du moteur 22 et s'étendant parallèlement aux colonnes 16. La tige filetée 24 comporte des portions d'extrémité lisses qui sont respectivement montées à rotation dans deux orifices respectifs des plateformes 18 et 20.

Le système 10 comprend également un support 26 comprenant une plateforme mobile 28 montée coulissante sur les colonnes 16, ainsi qu'une monture à fourche 30 fixée sur une colonne de support 32 elle-même montée sur une face inférieure de la plateforme mobile 28 d'une manière permettant la rotation de la colonne de support 32 autour d'un premier axe de rotation 34 parallèle aux colonnes 16.

Le senseur optronique 12 est monté sur la monture à fourche 30 d'une manière permettant la rotation du senseur optronique autour d'un deuxième axe de rotation 36 orthogonal au premier axe de rotation 34.

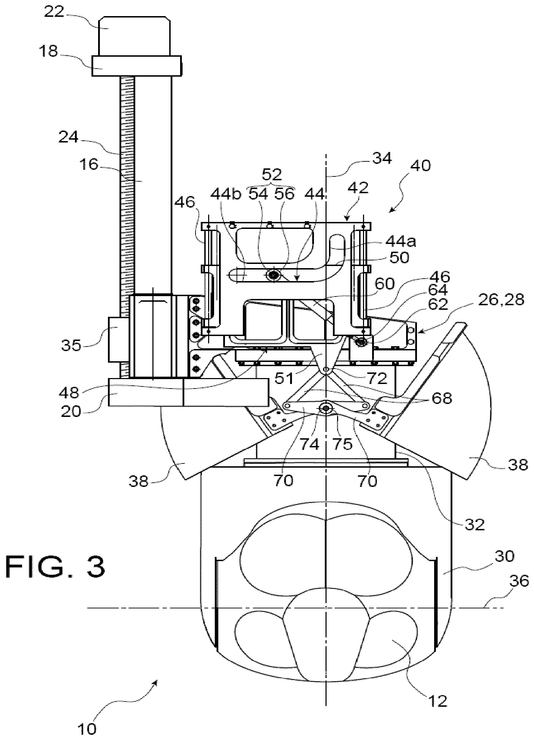

La plateforme mobile 28 comporte un orifice taraudé ou écrou 35 dans lequel est vissée la tige filetée 24, de manière à permettre l'entraînement du support 26 en translation le long des colonnes 16 par un effet de type « vis-écrou », entre une position dans laquelle le senseur optronique est escamoté (figures 1 et 2) et une position dans laquelle le senseur optronique est déployé (figure 3).

Le système 10 comporte en outre deux volets 38, chacun en forme de quart de sphère, ainsi que deux dispositifs de manoeuvre 40 permettant l'entraînement des volets 38 entre une première position (figures 1 et 2) et une seconde position (figure 3) d'une manière synchronisée avec le déplacement du support 26, comme cela apparaîtra plus clairement dans ce qui suit. Dans leur première position, les volets 38 sont destinés à obturer sensiblement une ouverture ménagée dans un carénage faisant partie de la nacelle de train d'atterrissage précitée et prévue pour le passage du senseur optronique 12. Il est à noter que les deux dispositifs de manoeuvre 40 sont agencés de chaque côté du système 10, de sorte que l'un de ces dispositifs de manoeuvre est masqué sur les figures 1 à 3.

Dans la première position (figures 1 et 2), les volets 38 sont sensiblement en contact l'un avec l'autre et sont disposés en regard du senseur optronique 12 qui se trouve dans sa position « escamoté ». Les volets 38 interceptent ainsi la trajectoire suivie par le senseur optronique 12 entre sa position « escamoté » et sa position « déployé ».

Dans la seconde position (figure 3), les volets 38 sont séparés l'un de l'autre et sont disposés de part et d'autre du senseur optronique 12 qui se trouve dans sa position « déployé ». Les volets 38 sont alors écartés de la trajectoire suivie par le senseur optronique 12.

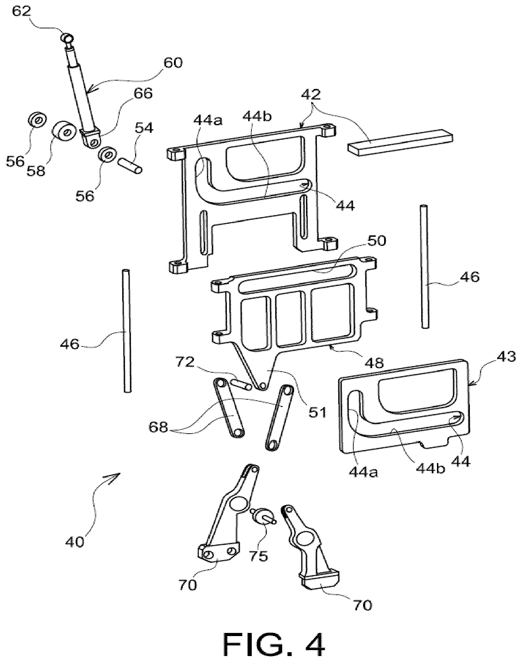

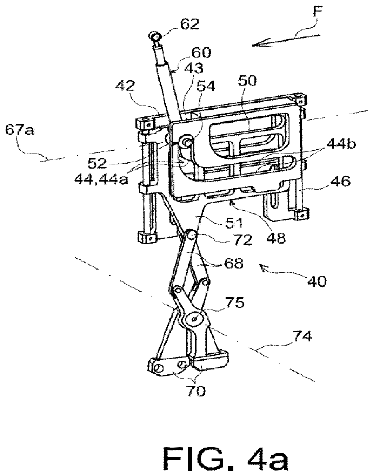

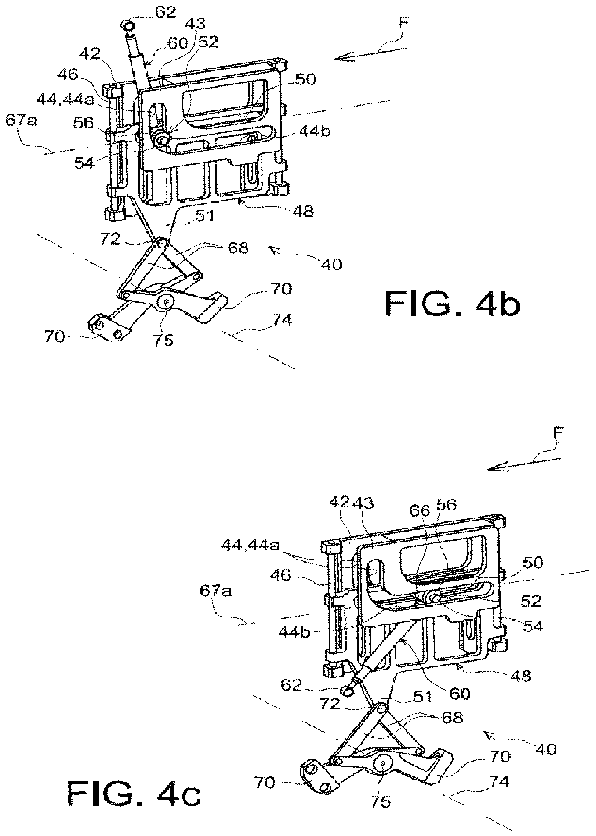

Les deux dispositifs de manoeuvre 40 sont semblables l'un à l'autre et sont disposés de part et d'autre du support 26. Ces dispositifs vont maintenant être décrits en détail en référence aux figures 2 et 3 qui montrent l'un des dispositifs de manoeuvre 40 intégré au système 10, et aux figures 4, 4a-4c qui illustrent ce dispositif de manoeuvre isolé du reste du système 10.

Le dispositif de manoeuvre 40 comporte un flasque principal 42 fixé sur la plaque latérale 14 correspondante (voir la figure 1), ainsi qu'un flasque secondaire 43 fixé sur une extrémité supérieure du flasque principal 42 et s'étendant à distance et en regard de ce dernier.

Les flasques 42 et 43 comportent respectivement deux glissières 44 semblables (voir les autres figures), chacune dénommée « première glissière » dans la terminologie de l'invention, et comportant chacune une première portion 44a s'étendant parallèlement aux colonnes 16, une deuxième portion 44b s'étendant orthogonalement aux colonnes 16, et une portion incurvée raccordant mutuellement les première et deuxième portions 44a, 44b. Par ailleurs, deux tiges de guidage 46, qui s'étendent parallèlement aux colonnes 16, sont fixées respectivement sur les côtés du flasque principal 42.

Le dispositif de manoeuvre 40 comporte en outre un tiroir 48 s'étendant entre le flasque principal 42 et le flasque secondaire 43. Ce tiroir 48 présente des extrémités latérales montées respectivement sur les tiges de guidage 46 de manière à permettre un coulissement du tiroir 48 le long des tiges de guidage 46. Le tiroir 48 comporte une glissière 50, dénommée « deuxième glissière » dans la terminologie de l'invention, formée dans une partie supérieure du tiroir et s'étendant orthogonalement aux colonnes 16, ainsi qu'une chape 51 formée dans une partie inférieure du tiroir 48.

Le dispositif de manoeuvre 40 comporte également un coulisseau 52 comprenant un pivot 54, deux premiers galets 56 (figure 4) montés sur le pivot 54 et engagés respectivement dans les premières glissières 44 respectives des flasques 42 et 43, ainsi qu'un deuxième galet 58 monté sur le pivot 54 et engagé dans la deuxième glissière 50 du tiroir 48. Le deuxième galet 58 est ainsi disposé entre les deux premiers galets 56.

Le dispositif de manoeuvre 40 comporte en outre une bielle 60 ayant une première extrémité 62 (figures 2 et 3) articulée à un pivot 64 monté sur une face latérale de la plateforme mobile 28, et une seconde extrémité 66 opposée articulée au pivot 54 du coulisseau 52 (figure 4c). Dans l'exemple illustré, la seconde extrémité 66 de la bielle est interposée entre le deuxième galet 58 et le premier galet 56 engagé dans la première glissière 44 du flasque secondaire 43.

Il est à noter que le pivot 64 forme des moyens d'articulation, dans la terminologie de l'invention. De plus, les pivots 54 et 64 définissent respectivement des axes d'articulation des première et seconde extrémités 62, 66 de la bielle 60.

Dans l'exemple illustré, la bielle 60 est conçue pour amortir les vibrations entre ses deux extrémités 62 et 66. A cet effet, ces deux extrémités de la bielle sont montées coulissantes l'une par rapport à l'autre et des moyens élastiques d'amortissement sont interposés entre ces deux extrémités de la bielle à l'intérieur de cette dernière. Ces moyens élastiques d'amortissement prennent par exemple la forme d'un ressort à double effet.

Lorsque le senseur optronique 12 est dans sa position « escamoté » (figure 2), l'axe d'articulation de la première extrémité 62 de la bielle 60, défini par le pivot 64, est décalé par rapport à l'axe d'articulation défini par le pivot 54 du coulisseau 52, dans la direction symbolisée par la flèche F, c'est-à-dire la direction allant de la deuxième portion 44b vers la première portion 44a de chaque première glissière 44. Plus précisément, la projection orthogonale de l'axe d'articulation défini par le pivot 64 sur une ligne 67a, parallèle à la deuxième portion 44b de chaque première glissière 44 et passant par l'axe d'articulation défini par le pivot 54, est décalée par rapport à ce dernier axe d'articulation, dans la direction de la flèche F. Il est à noter que cette projection orthogonale de l'axe d'articulation défini par le pivot 64 correspond à l'intersection de la ligne 67a avec une ligne 67b parallèle aux colonnes 16 et passant par ce dernier axe d'articulation (figure 2).

Cette propriété se vérifie durant tout le processus de déploiement et d'escamotage. En particulier, cette propriété se vérifie au cours du déploiement, au moment où les premiers galets 56 du coulisseau 52 quittent la portion incurvée et entrent dans la deuxième portion 44b de chaque première glissière 44. Cela permet de garantir que la bielle 60 continue de pousser le coulisseau 52 plus loin dans les deuxièmes portions 44b respectives des premières glissières 44, jusqu'à ce que la première extrémité 62 de la bielle 60 traverse la ligne 67a, comme cela apparaîtra plus clairement dans ce qui suit.

Le dispositif de manoeuvre 40 comporte également deux premiers bras 68 et deux seconds bras 70.

Les extrémités supérieures respectives des premiers bras 68 sont articulées sur un même pivot 72 monté dans la chape 51 du tiroir 48. Les extrémités inférieures respectives des premiers bras 68 sont articulées respectivement aux extrémités supérieures respectives des seconds bras 70. Les seconds bras 70 comportent des parties médianes respectives montées rotatives autour d'un même axe d'articulation 74 (figures 4a-4c) défini par un pivot 75 lui-même monté sur la plaque latérale 14 correspondante (dont une partie est visible sur les figures 2 et 3). Les seconds bras 70 comportent des extrémités inférieures respectives fixées respectivement aux deux volets 38 (figures 2 et 3).

Il est à noter que l'axe d'articulation 74 des seconds bras 70 s'étend de préférence parallèlement à une direction longitudinale de l'aéronef équipé du système 10. Ainsi, le déplacement des volets 38 s'effectue sensiblement orthogonalement au vent relatif lorsque l'aéronef est en vol.

Le fonctionnement du système 10 va maintenant être décrit.

Lorsque le système est dans l'état correspondant à la figure 2, le senseur optronique 12 est escamoté et les volets 38 sont dans leur première position, en regard du senseur optronique, de manière à protéger ce dernier vis-à-vis de chocs éventuels avec des obstacles ou projectiles.

Dans cet état, le dispositif de manoeuvre 40 est tel que le montre la figure 4a. En particulier, chaque premier galet 56 du coulisseau 52 est disposé sensiblement à l'extrémité supérieure de la première portion 44a de la première glissière 44 correspondante.

Le déploiement du senseur optronique 12 est provoqué par une commande de mise en fonctionnement du moteur 22 de manière à faire tourner la tige filetée 24 dans un sens permettant un déplacement du support 26 en direction de la plateforme inférieure 20, par effet vis-écrou.

La plateforme mobile 28 entraîne alors la première extrémité 62 de la bielle 60 selon une trajectoire rectiligne parallèle aux colonnes 16.

Simultanément, chaque premier galet 56 du coulisseau 52 est guidé le long de la première glissière 44 correspondante.

Dans une première phase du déploiement, chaque premier galet 56 se déplace vers le bas dans la première portion 44a de la première glissière 44 correspondante, puis dans la portion incurvée de celle-ci, entraînant par là-même vers le bas le deuxième galet 58 du coulisseau 52 et donc le tiroir 48 ainsi que le pivot 72 monté dans la chape 51 du tiroir 48. Le déplacement vers le bas du pivot 72 provoque un écartement mutuel des extrémités inférieures des premiers bras 68, qui provoquent à leur tour un écartement mutuel des extrémités inférieures des seconds bras 70 par un effet de mouvement en ciseaux, d'où il résulte un écartement mutuel des volets 38.

La figure 4b montre le dispositif de manoeuvre 40 lorsque chaque premier galet 56 se trouve dans la portion incurvée de la première glissière 44 correspondante.

Sous l'effet du déplacement vers le bas de la première extrémité 62 de la bielle 60, le premier galet 56 poursuit son parcours jusqu'à entrer dans la deuxième portion 44b de la première glissière 44. Ce moment marque le passage dans une deuxième phase du déploiement, dans laquelle le tiroir 48 cesse de se déplacer, compte-tenu de l'orientation des premières glissières 44 et de la deuxième glissière 50. Les volets 38 ont alors atteint leur seconde position.

Entraînée par la tige filetée 24, la plateforme mobile 28 continue d'entraîner la première extrémité 62 de la bielle 60 vers le bas, ce qui tend à pousser chaque premier galet 56 plus loin dans la deuxième portion 44b de la première glissière 44 correspondante.

Lorsque la première extrémité 62 de la bielle 60 traverse la ligne 67a orthogonale aux colonnes 16 et passant par l'axe d'articulation défini par le pivot 54 du coulisseau 52, le sens du déplacement de chaque premier galet 56 dans la deuxième portion 44b de chaque première glissière 44 s'inverse. En effet, le déplacement vers le bas de la première extrémité 62 de la bielle 60 tend dès lors à tirer chaque premier galet 56 dans le sens de la flèche F.

Le déploiement se termine avant que chaque premier galet 56 n'atteigne la portion incurvée de la première glissière 44 correspondante.

Le dispositif de manoeuvre est alors dans l'état illustré par la figure 4c, et le senseur optronique 12 est déployé, le support 26 s'étendant entre les volets 38, comme le montre la figure 3.

L'escamotage du senseur optronique 12 est provoqué par une commande de mise en fonctionnement du moteur 22 de manière à faire tourner la tige filetée 24 dans un sens permettant un déplacement du support 26 en direction de la plateforme supérieure 18, par effet vis-écrou.

Le dispositif de manoeuvre 40 suit alors une cinématique inversée par rapport à ce qui a été décrit ci-dessus. Ainsi, dans une première phase de l'escamotage, le tiroir 48 demeure immobile de sorte que les volets 38 demeurent écartés pour permettre le passage du senseur optronique 12, puis dans une deuxième phase de l'escamotage, le tiroir 48 est entraîné vers le haut par le coulisseau 52 et provoque le déplacement des volets 38 jusqu'à ce que ces derniers atteignent leur première position illustrée sur la figure 2.

Il apparaît clairement que le dispositif de manoeuvre opère une synchronisation optimale des déplacements du support 26 et des volets 38. Plus précisément, le coulisseau 52 permet une conversion du déplacement rectiligne du support 26, et donc du senseur optronique 12, en un déplacement rectiligne du pivot 72 monté dans la chape 51 du tiroir 48, en permettant une variation du rapport des vitesses respectives du pivot 72 et du support 26.

La courbe de variation de ce rapport de vitesses le long de la course du support 26 est en particulier déterminée par la forme des premières glissières 44 qui forment conjointement une came, et par la forme de la deuxième glissière 50. Le coulisseau 52 forme ainsi un suiveur de came, dans la terminologie de l'invention.

De plus, dans la terminologie de l'invention, la bielle 60 forme des premiers moyens de couplage, tandis que le tiroir 48 forme des seconds moyens de couplage, et le pivot 72 monté dans la chape 51 du tiroir 48 forme un organe d'entraînement.

D'une manière générale, le moteur 22 (figure 1) permet d'entraîner le support 26 du senseur optronique 12 ainsi que les volets 38, selon des cinématiques respectives optimales.

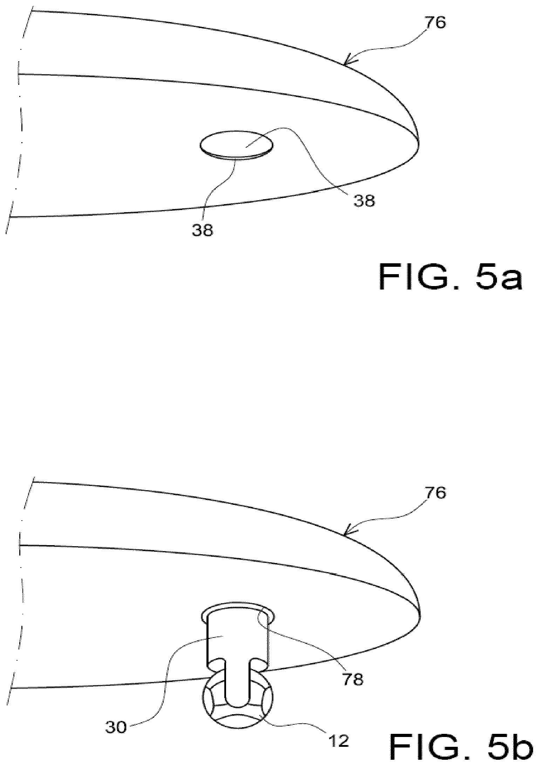

Les figures 5a et 5b illustrent une nacelle 76 de train arrière d'avion de transport militaire dans laquelle un système 10 du type décrit ci-dessus peut être logé.

La figure 5a montre le système 10 avec le senseur optronique en position « escamoté », seul les volets 38 étant ainsi visibles depuis l'extérieur de la nacelle 76. Ces volets sont dans leur première position précitée et forment ainsi un dôme faisant saillie au travers d'un orifice 78 prévu dans une portion inférieure de la nacelle 76. Les volets 38 ferment ainsi sensiblement l'orifice 78.

La figure 5b montre le senseur optronique 12 en position « déployé ». Dans ce cas, les volets 38 sont remontés à l'intérieur de la nacelle 76 en étant écartés de part et d'autre de l'orifice 78 précité, et la monture à fourche 30 fait saillie au travers de l'orifice 78.

En variante, le couplage entre le support 26 et le coulisseau 52 peut ne pas être assuré par une bielle comme décrit ci-dessus, mais par une glissière additionnelle solidaire du support 26 et dans laquelle s'engage le coulisseau 52. Une telle glissière peut être par exemple formée dans un flasque s'étendant vers le bas depuis la plateforme mobile 28. La glissière additionnelle présente une forme rectiligne inclinée par rapport à la direction de la deuxième portion 44b de chaque première glissière 44, dans le sens allant du bas vers le haut en allant de la première portion 44a vers la deuxième portion 44b de chaque première glissière 44. Ainsi, le coulisseau 52 demeure fixe par rapport à la glissière additionnelle lorsqu'il se trouve dans la première portion 44a de chaque première glissière. Le coulisseau 52 est alors entraîné avec le support 26 et entraîne avec lui le tiroir 48. En revanche, lorsque le coulisseau 52 se trouve dans la deuxième portion 44b de chaque première glissière 44, le coulisseau se déplace dans la glissière additionnelle de manière à autoriser la poursuite du déplacement du support 26 tout en bloquant le tiroir 48 par rapport au châssis.

D'une manière générale, le système 10 décrit ci-dessus propose un mode de déploiement et d'escamotage d'un équipement 12 selon la direction verticale d'un aéronef. Il apparaît néanmoins clairement que le fonctionnement du système 10 est indépendant de l'orientation de ce dernier. Le système 10 peut ainsi être positionné de manière à permettre un déploiement de l'équipement 12 selon une autre direction sans sortir du cadre de l'invention.

## Revendications

1. Système (10) pour aéronef, comprenant :
- un châssis (14, 16, 18, 20) destiné à être monté sur une structure d'aéronef,
- un équipement (12) déplaçable par rapport audit châssis, le long d'une trajectoire prédéterminée, entre une position « escamoté » et une position « déployé »,
- des moyens de protection (38) déplaçables entre une première position dans laquelle lesdits moyens de protection (38) interceptent ladite trajectoire dudit équipement (12) pour protéger ce dernier, et une seconde position dans laquelle lesdits moyens de protection (38) sont écartés de ladite trajectoire pour permettre le passage dudit équipement (12), et
- au moins un dispositif de manoeuvre (40) pour entraîner lesdits moyens de protection (38) entre lesdites première et seconde positions,
**caractérisé en ce que** ledit dispositif de manoeuvre (40) comprend :
- une came (44) solidaire dudit châssis,
- un suiveur de came (52) coopérant avec ladite came (44),
- un organe d'entraînement (72) relié auxdits moyens de protection (38) de manière à entraîner ces derniers entre lesdites première et seconde positions,
- des premiers moyens de couplage (60) assurant un couplage mécanique dudit suiveur de came (52) audit équipement (12), et
- des seconds moyens de couplage (48) assurant un couplage mécanique dudit suiveur de came (52) audit organe d'entraînement (72),
et **en ce que** ladite came (44), lesdits premiers moyens de couplage (60) et lesdits seconds moyens de couplage (48) sont configurés de sorte que ledit suiveur de came (52) convertisse un déplacement rectiligne dudit équipement (12) le long de ladite trajectoire en un déplacement rectiligne dudit organe d'entraînement (72), d'une manière telle que le rapport des vitesses respectives dudit organe d'entraînement et dudit équipement varie au cours du déplacement dudit équipement.

2. Système selon la revendication 1, dans lequel ladite came (44), lesdits premiers moyens de couplage (60) et lesdits seconds moyens de couplage (48) sont configurés pour coupler le déplacement dudit organe d'entraînement (72) au déplacement dudit équipement (12) lorsque ce dernier se trouve entre sa position « escamoté » et une position intermédiaire prédéterminée, et pour découpler les déplacements dudit organe d'entraînement (72) et dudit équipement (12) lorsque ce dernier se trouve entre ladite position intermédiaire prédéterminée et sa position « déployé ».

3. Système selon la revendication 1 ou 2, dans lequel :
- ladite came est formée par une première glissière (44), solidaire dudit châssis,
- lesdits seconds moyens de couplage (48) comprennent une deuxième glissière (50) déplaçable parallèlement à ladite trajectoire dudit équipement (12), et
- ledit suiveur de came (52) est engagé simultanément dans lesdites première et deuxième glissières (44, 50).

4. Système selon la revendication 3, dans lequel :
- ladite première glissière (44) comporte une première portion (44a) s'étendant parallèlement à ladite trajectoire dudit équipement (12), une deuxième portion (44b) s'étendant orthogonalement à ladite trajectoire dudit équipement (12), et une portion incurvée de manière à permettre un guidage dudit suiveur de came (52) de l'une vers l'autre desdites première et deuxième portions (44a, 44b), et
- ladite deuxième glissière (50) s'étend orthogonalement à ladite trajectoire dudit équipement (12).

5. Système selon l'une quelconque des revendications précédentes, comprenant un support (26) sur lequel est monté ledit équipement, et dans lequel :
- ledit support (26) est pourvu de moyens d'articulation (64), et
- lesdits premiers moyens de couplage comprennent une bielle (60) ayant une première extrémité (62) articulée auxdits moyens d'articulation (64) dudit support, et une seconde extrémité (66) articulée audit suiveur de came (52).

6. Système selon l'ensemble des revendications 4 et 5, dans lequel lesdits moyens d'articulation (64) dudit support (26) sont agencés de sorte que la projection orthogonale d'un axe d'articulation de ladite première extrémité (62) de ladite bielle (60), sur une ligne (67a) parallèle à ladite deuxième portion (44b) de ladite première glissière (44), soit décalée par rapport à un axe d'articulation de ladite seconde extrémité (66) de ladite bielle (60), dans un sens allant de ladite deuxième portion (44b) vers ladite première portion (44a) de ladite première glissière (44), lorsque ledit suiveur de came (52) atteint ladite deuxième portion (44b) de ladite première glissière (44) en se déplaçant de ladite première portion (44a) vers ladite deuxième portion (44b) de la première glissière (44).

7. Système selon l'une quelconque des revendications précédentes, dans lequel lesdits moyens de protection comprennent deux volets (38), et dans lequel ledit dispositif de manoeuvre (40) comprend en outre :
- deux premiers bras (68) articulés conjointement auxdits seconds moyens de couplage (48) au moyen d'un pivot (72) formant ledit organe d'entraînement, et
- deux seconds bras (70) ayant des premières parties d'extrémité respectives articulées respectivement auxdits premiers bras (68), des secondes parties d'extrémité respectives fixées respectivement aux deux volets (38) dudit système, et des parties médianes respectives articulées conjointement audit châssis de manière à pivoter autour d'un même axe d'articulation (74), de sorte que lesdits seconds bras (70) forment un mécanisme en ciseaux.

8. Système selon la revendication 7, dans lequel lesdits volets (38) ont chacun la forme d'une portion de sphère.

9. Aéronef, **caractérisé en ce qu'**il comprend au moins un système (10) selon l'une quelconque des revendications précédentes.

10. Aéronef selon la revendication précédente, dans lequel lesdits moyens de protection (38) dudit système (10) ferment une ouverture (78) ménagée dans un carénage (76) dudit aéronef lorsque ces moyens de protection (38) sont dans ladite première position.

## Patentansprüche

1. System (10) für ein Flugzeug, umfassend:
- ein Gestell (14, 16, 18, 20), das dazu bestimmt ist, auf einer Flugzeugstruktur montiert zu werden,
- eine in Bezug auf das Gestell entlang einer vorbestimmten Bahn zwischen einer "versenkten" Position und einer "ausgefahrenen" Position verschiebbare Ausstattung (12),
- Schutzmittel (38), die zwischen einer ersten Position, in der die Schutzmittel (38) die Bahn der Ausstattung (12) abfangen, um diese letztgenannte zu schützen, und einer zweiten Position, in der die Schutzmittel (38) von der Bahn entfernt sind, um den Durchgang der Ausstattung (12) zu ermöglichen, verschiebbar sind, und
- mindestens eine Betätigungsvorrichtung (40), um die Schutzmittel (38) zwischen der ersten und der zweiten Position anzutreiben,
**dadurch gekennzeichnet, dass** die Betätigungsvorrichtung (40) Folgendes umfasst:
- ein fest mit dem Gestell verbundener Nocken (44),
- einen Nockenfolger (52), der mit dem Nocken (44) zusammenwirkt,
- ein Antriebselement (72), das mit den Schutzmitteln (38) verbunden ist, um diese letztgenannten zwischen der ersten und der zweiten Position anzutreiben,
- erste Kopplungsmittel (60), die eine mechanische Kopplung des Nockenfolgers (52) und der Ausstattung (12) gewährleisten, und
- zweite Kopplungsmittel (48), die eine mechanische Kopplung des Nockenfolgers (52) und des Antriebselements (72) gewährleisten
und dadurch, dass der Nocken (44), die ersten Kopplungsmittel (60) und die zweiten Kopplungsmittel (48) derart ausgeführt sind, dass der Nockenfolger (52) eine geradlinige Verschiebung der Ausstattung (12) entlang der Bahn in eine geradlinige Verschiebung des Antriebselements (72) umwandelt, so dass das jeweilige Geschwindigkeitsverhältnis des Antriebselements und der Ausstattung bei der Verschiebung der Ausstattung variiert.

2. System nach Anspruch 1, bei dem der Nocken (44), die ersten Kopplungsmittel (60) und die zweiten Kopplungsmittel (48) dazu vorgesehen sind, die Verschiebung des Antriebselements (72) mit der Verschiebung der Ausstattung (12) zu koppeln, wenn sich diese letztgenannte zwischen ihrer "versenkten" Position und einer vorbestimmten Zwischenposition befindet, und die Verschiebungen des Antriebselements (72) und der Ausstattung (12) zu entkoppeln, wenn sich diese letztgenannte zwischen der vorbestimmten Zwischenposition und ihrer "ausgefahrenen" Position befindet.

3. System nach Anspruch 1 oder 2, bei dem:
- der Nocken von einer ersten, fest mit dem Gestell verbundenen Gleitschiene (44) gebildet ist,
- die zweiten Kopplungsmittel (48) eine zweite Gleitschiene (50) umfassen, die parallel zur Bahn der Ausstattung (12) verschiebbar ist, und
- der Nockenfolger (52) gleichzeitig in der ersten und der zweiten Gleitschiene (44, 50) in Eingriff ist.

4. System nach Anspruch 3, bei dem:
- die erste Gleitschiene (44) einen ersten Abschnitt (44a), der sich parallel zu der Bahn der Ausstattung (12) erstreckt, einen zweiten Abschnitt (44b), der sich orthogonal zur Bahn der Ausstattung (12) erstreckt, und einen gekrümmten Abschnitt umfasst, um eine Führung des Nockenfolgers (52) von dem einen zu dem anderen des ersten und des zweiten Abschnittes (44a, 44b) zu ermöglichen, und
- sich die zweite Gleitschiene (50) orthogonal zu der Bahn der Ausstattung (12) erstreckt.

5. System nach einem der vorhergehenden Ansprüche, umfassend einen Träger (26), auf dem die Ausstattung montiert ist, und bei dem:
- der Träger (26) mit Gelenkmitteln (64) versehen ist, und
- die ersten Kopplungsmittel eine Stange (60) umfassen, die ein erstes Ende (62), das an den Gelenkmitteln (64) des Trägers angelenkt ist, und ein zweites Ende (66), das am Nockenfolger (52) angelenkt ist, aufweist.

6. System nach der Gesamtheit der Ansprüche 4 und 5, bei dem die Gelenkmittel (64) des Trägers (26) derart angeordnet sind, dass die orthogonale Projektion einer Gelenkachse des ersten Endes (62) der Stange (60) auf eine Linie (67a) parallel zu dem zweiten Abschnitt (44b) der ersten Gleitschiene (44) in Bezug auf eine Gelenkachse des zweiten Endes (66) der Stange (60) in eine Richtung, die von dem zweiten Abschnitt (44b) zum ersten Abschnitt (44a) der ersten Gleitschiene (44) verläuft, versetzt ist, wenn der Nockenfolger (52) den zweiten Abschnitt (44b) der ersten Gleitschiene (44) erreicht, wobei er sich von dem ersten Abschnitt (44a) zu dem zweiten Abschnitt (44b) der ersten Gleitschiene (44) verschiebt.

7. System nach einem der vorhergehenden Ansprüche, bei dem die Schutzmittel zwei Klappen (38) umfassen, und bei dem die Betätigungsvorrichtung (40) ferner Folgendes umfasst:
- zwei erste Arme (68), die gemeinsam an die zweiten Kopplungsmittel (48) mit Hilfe eines Zapfens (72), der das Antriebselement bildet, angelenkt sind, und
- zwei zweite Arme (70), die erste Endabschnitte, die jeweils an die ersten Arme (68) angelenkt sind, zweite Endabschnitte, die jeweils an den beiden Klappen (38) des Systems befestigt sind, und Mittelteile aufweisen, die jeweils gemeinsam am Gestell angelenkt sind, um um eine selbe Gelenkachse (74) zu schwenken, so dass die zweiten Arme (70) einen Schermechanismus bilden.

8. System nach Anspruch 7, bei dem die Klappen (38) jeweils die Form eines Kugelabschnitts haben.

9. Flugzeug, **dadurch gekennzeichnet, dass** es mindestens ein System (10) nach einem der vorhergehenden Ansprüche umfasst.

10. Flugzeug nach dem vorhergehenden Anspruch, bei dem die Schutzmittel (38) des Systems (10) eine Öffnung (78), die in einer Ausnehmung (76) des Flugzeugs vorgesehen ist, verschließen, wenn diese Schutzmittel (38) in der ersten Position sind.

## Claims

1. A system (10) for an aircraft, the system comprising:
• a frame (14, 16, 18, 20) for mounting on an aircraft structure;
• equipment (12) movable relative to said frame along a predetermined path between a "retracted" position and a "deployed" position;
• protection means (38) movable between a first position in which said protection means (38) intercept said path of said equipment (12) in order to protect it, and a second position in which said protection means (38) are spaced apart from said path in order to allow said equipment (12) to pass therealong; and
• at least one drive device (40) for driving said protection means (38) between said first and second positions;
the system being **characterized in that** said drive device (40) comprises:
• a cam (44) secured to said frame;
• a cam follower (52) co-operating with said cam (44) ;
• a drive member (72) connected to said protection means (38) so as to drive them between said first and second positions;
• first coupling means (60) mechanically coupling said cam follower (52) to said equipment (12); and
• second coupling means (48) mechanically coupling said cam follower (52) to said drive member (72);
and **in that** said cam (44), said first coupling means (60), and said second coupling means (48) are configured in such a manner that said cam follower (52) converts straight-line movement of said equipment (12) along said path into straight-line movement of said drive member (72) in such a manner that the ratio of the respective speeds of said drive member and of said equipment varies during the movement of said equipment.

2. A system according to claim 1, wherein said cam (44), said first coupling means (60), and said second coupling means (48) are configured to couple the movement of said drive member (72) with the movement of said equipment (12) when the equipment lies between its "retracted" position and a predetermined intermediate position, and to decouple the movements of said drive member (72) and of said equipment (12) when said equipment lies between said predetermined intermediate position and its "deployed" position.

3. A system according to claim 1 or claim 2, wherein:
• said cam is formed by a first slideway (44) secured to said frame;
• said second coupling means (48) comprise a second slideway (50) movable in parallel with said path of said equipment (12); and
• said cam follower (52) is engaged simultaneously in said first and second slideways (44, 50).

4. A system according to claim 3, wherein:
• said first slideway (44) has a first portion (44a) extending parallel to said path of said equipment (12), a second portion (44b) extending orthogonally to said path of said equipment (12), and a curved portion serving to enable said cam follower (52) to be guided from one to the other of said first and second portions (44a, 44b); and
• said second slideway (50) extends orthogonally to said path of said equipment (12).

5. A system according to any preceding claim, including a support (26) on which said equipment is mounted, and wherein:
• said support (26) is provided with hinge means (64); and
• said first coupling means comprise a connecting rod (60) having a first end (62) hinged to said hinge means (64) of said support, and a second end (66) hinged to said cam follower (52).

6. A system according to claims 4 and 5 taken together, wherein said hinge means (64) of said support (26) are arranged in such a manner that the orthogonal projection of a hinge axis of said first end (62) of said connecting rod (60) onto a line (67a) parallel to said second portion (44b) of said first slideway (44) is offset from a hinge axis of said second end (66) of said connecting rod (60) in a direction going from said second portion (44b) towards said first portion (44a) of said first slideway (44), when said cam follower (52) reaches said second portion (44b) of said first slideway (44) by moving from said first portion (44a) towards said second portion (44b) of the first slideway (44).

7. A system according to any preceding claim, wherein said protection means comprise two flaps (38), and wherein said drive device (40) further comprises:
• two first arms (68) hinged jointly to said second coupling means (48) by means of a pivot (72) forming said drive member; and
• two second arms (70) having respective first end portions hinged respectively to said first arms (68), respective second end portions fastened respectively to the two flaps (38) of said system, and respective middle portions hinged together to said frame in such a manner as to pivot about a common hinge axis (74) such that said second arms (70) form a scissors mechanism.

8. A system according to claim 7, wherein each of said flaps (38) is in the form of a portion of a sphere.

9. An aircraft, **characterized in that** it includes at least one system (10) according to any preceding claim.

10. An aircraft according to the preceding claim, wherein said protection means (38) of said system (10) close an opening (78) arranged in a fairing (76) of said aircraft when said protection means (38) are in said first position.
